# EUROPEAN PATENT SPECIFICATION

(11) **EP 4 733 477 B1**
(45) Date of publication and mention of the grant of the patent: **21.10.2026**
(21) Application number: 24208273.3
(22) Date of filing: 23.10.2024
(51) Int. Cl.: E01B 26/00, B60M 5/00, B60M 1/04

(54) **RAIL COVER CABLE GUARD MADE OF IDENTICAL PIECES**
AUS IDENTISCHEN TEILEN HERGESTELLTER SCHIENENABDECKKABELSCHUTZ
DISPOSITIF DE PROTECTION DE CÂBLE DE RECOUVREMENT DE RAIL CONSTITUÉ DE PIÈCES IDENTIQUES

(43) Date of publication of application: 29.04.2026
(73) Proprietor: HellermannTyton Data Limited, Northampton NN5 5JE (GB)
(72) Inventor: CIPRIANI, Stefano, Stockton Heath (GB)
(74) Representative: Hernandez, Yorck

(56) References cited:
- EP-A1- 3 536 854
- DE-U1- 202013 003 686
- KR-B1- 102 216 086
- US-A1- 2006 032 934
- US-A1- 2008 257 973
- US-B2- 7 717 387

## Description

### Field of the invention

The disclosure relates to a rail cover device for covering an underside of a foot of a railway rail, with a first cover unit with a first holding element configured for holding the first cover unit onto an edge of a foot of the railway rail in a defined position, and with a first covering element with one or more first plate sections extending perpendicular to a main extension direction of railway rail below said foot of the railway when the first cover unit is clamped onto the edge of the foot of the railway rail, and with a second cover unit with a second holding element configured for holding the second cover unit on an edge of the foot of the railway rail in a defined position, and with a second covering element with one or more second plate sections extending perpendicular to the main extension direction of railway rail below said foot of the railway when the first cover unit is clamped onto the edge of the foot of the railway rail, wherein first and second holding elements are configured for holding the respective cover unit on the foot of the railway rail at opposite positions on opposing edges of the foot of the railway rail.

### Background

A common problem in the field of railway design and, in particular, railway rail cabling is how to appropriately manage or organise cables which need to be routed underneath the running rails of a train track. Existing methods of routing cables underneath running rails include clipping the cables to railway sleepers, which support the rails. This technique can be detrimental to the life of the sleepers depending on the methods used to clip the cables to the sleepers and can also take significant time for installation, which in turns raises cost and complexity. Another method for routing cables underneath railway tracks includes laying simple plastic drainpipes underneath the rails as a guide and running cables through the plastic drainpipes. It can however be impossible or very difficult to run cables with plug couplers (plug ends) through such drainpipes as they may be too large or a very tight fit. When cables are run under rails and/or next to sleepers, relative movement between the cables and the rails and/or sleepers can result in wear of the cables and in particular wear of the protective insulation part of the cable. Non-invasive systems for a connection between a railroad track rail and any electrical conductor, for example signal lines, wires or cables, are also known from the prior art.

US 2008/257973 A1 shows a device for connecting a component to track rail, the device having the form of a rail cover for covering an underside of a foot of a railway rail, the rail cover comprising mutually connectable cover parts configured to respectively extend at least partially around opposing sides of the foot of the railway rail and connectable by an adjustable ratcheting connection to resist separation of the mutually connectable cover parts. Similar devices are shown in US 2006 032 934 A1, DE 20 2013 003 686 U1, KR 102 216 086 B1 and US7717387B2.

EP 3 536 854 B1 shows a rail cover for covering an underside of a foot of a railway rail, with mutually connectable cover parts configured to respectively extend at least partially around opposing sides of the foot of the railway rail and connectable by an adjustable ratcheting connection or an interference fit to resist separation of the mutually connectable cover parts.

The technical task, therefore, is to overcome the disadvantages of know solutions and provide reliable cable protection for railway cables that can be installed in a simple and fast manner.

### Overview

This task is solved by the objects of the independent claims. Advantageous embodiments will be apparent from the dependent claims, the description and the figures.

One aspect relates to a rail cover device for an attachment at an underside of a foot of a railway rail, in particular for covering and/or filling a gap between sleeper and railway rail. Such a gap may be caused by a railway fixing.

The rail cover device comprises a first cover unit and a second cover unit that jointly provide said cover when attached to the railway rail. Both cover units have a respective first/second holding element configured for holding the first/second cover unit on an edge of a foot of the railway rail in a defined position. To this end, the holding element is configured to extend at least partially around said edge. The holding element may comprise a hook-like shape configures to be hooked onto the railway rail edge. Both cover units also have a respective first/second covering element with one or more first/second plate sections extending perpendicular to a main extension direction of railway rail below said foot of the railway when the respective cover unit is attached to (or held/clamped on) the edge of the foot of the railway rail by means of the respective holding element.

The plate sections may have length (measured along the main extension direction of the respective cover unit) and/or a height (measured transverse to said main extension direction of the respective cover unit) which is exceeding a thickness of the plate section (measured transverse to said length and height directions) by a factor of at least 5, preferably of at least 10, more preferably of at least 20. Consequently, the plate sections mainly extend along the main extension direction of the respective cover unit and along the height direction of the respective cover unit running transverse to the main extension direction of the respective cover unit. The plate sections may but need not be of rectangular shape.

The holding elements may merge into the covering elements, in particular their plate sections. In addition to the plate sections, the covering elements may comprise a respective contact section which has a main extension plane that runs along length and width direction of the respective cover unit, i.e. along the underside of the railway rail foot. The cover units may be configured such that at least one, preferably only one of the cover units is in mechanical contact with the railway rail foot with its contact section when the rail cover device is installed on the railway rail.

The respective holding elements are configured for holding the respective cover units on the foot of the railway rail at opposite positions on opposing edges of the foot of the railway rail, preferably such that the railway rail foot is clamped between the two holding elements of the two cover units forming the rail cover device when the rail cover device is installed.

The first and second cover units are identical cover units, i.e. identical pieces. They may form the rail cover device jointly, i.e. without the any other part or pieces required.

This gives the advantage of an easy installation of the rail cover, where only two identical parts are required for providing the rail cover (although additional part may be added to further improve the rail cover/cable protection). This also prevents handling mistakes, thus contributes to reliability and speed of the rail cover device installation.

In one embodiment, it is provided that first and second plate sections jointly extend, along a rail width direction perpendicular to the main extension direction (length) of the railway rail, over at least most of the width of the foot of the railway rail, preferably over at least 50% of the width, more preferably over at least 80%, or most preferably over the full width of the foot of the railway rail. This can be pre-designed since the railway rails are standardized parts, usually having a foot width of 125mm-150mm. This gives the advantage that the gap between rail and sleeper can be covered/filled to an extent that prevents any rail cable form being pinched in said gap.

In a further embodiment, it is provided that the holding elements are arranged at end sections of the respective cover unit, which end sections preferably cover less than 35%, more preferably less than 20%, most preferably less than 15% of the length measured in the main extension direction of the cover units. This gives the advantage of a particularly efficient cover which reached far under the rail and is protected against unintentional sliding of the cover units along the railway rail.

In one embodiment, it is provided that the holding elements have a metal insert configured as an edge clip for the edge of the railway rail foot. This gives the advantage of increased attachment forces for the respective cover unit which are independent from the other cover unit and a potential interaction of the cover units.

In a further embodiment, it is provided that the cover units comprise a female ratchet extending along the main extension direction of the respective cover unit, as well as a male ratchet, which male ratchet is aligned with the female ratchet but oriented oppositely to the female ratchet. The female ratchet may protrude from the plate section at a first side of the plate section into the thickness direction of the plate section. In addition or alternatively, the female ratchet may be a part of the contact section or merge into the contact section. Advantageously, the cover units also comprise a counter-guide extending along the female ratchet in a given distance measured in the height direction, which distance matches a height of the female ratchet protruding from the plate section. This gives the advantage that the two cover units can form a ratching/latching connection when inserted into one another. This provides easy installation and improves tolerance of the rail cover device with respect to varying widths of the railway rail foot, contributing to reliability. The counter-guide fosters these advantages further.

Accordingly, both ends of the female ratchet along the main extension direction of the respective cover unit may be open ends (through which where the corresponding other cover unit may be slid along the ratching/latching connection in the length direction), and one side of the female ratchet extending along the main extension direction of the respective cover unit is an open side (through which the cover units may be inserted to one another along the width direction). This contributes to the ease-of-installation, in particular it allows to insert the cover units into one another at various different positions along the femal ratchet, as well as sliding the cover units back and forth to a large extent during installation and the preparation of the installation.

The female ratchet and/or its counter-guide may be arranged at an upper region of the cover unit, in particular the plate section, which upper region of the cover unit is closer to the holding elements (and thus the railway rail) than a lower region. In particular upper/lower region extend over less than 40% of the cover unit/plate section height, preferably less than 30%, and comprises respective upper/lower ends of the cover unit/plate section.

In one embodiment, it is provided that a guide rail extends along the main extension direction of the respective cover unit, which guide rail protrudes in the thickness direction of the respective cover unit from the corresponding plate section on the same side than the female ratchet. This provides additional guidance and stabilization, in particular for the ratching/latching connection.

Therein, the guide rail may comprise an off-set guide rail subsection, which guide rail subsection is off-set from the remaining guide rail in the height direction of the respective cover unit. Preferably, the off-set is matching the extension of the guide rail in the height direction, such that the guide rail of one cover unit may be guided by the guide rail of the other cover unit when the cover units are inserted into one another when slid with respect to each other along the length direction. This prevents canting and thus enhances handling and reliability. Preferably, the guide rail is arranged in the lower region of the cover unit, in particular the plate section.

Thus, it Is advantageous to maximize the distance between female ratchet and guide rail. Preferably female ratchet with male ratchet and/or guide rail extend over a large part of the cover unit length (in particular plate section length), for instance over more than 70% of the length, more preferably more than 85% of the length, most preferably over more than 95% of the length. This leads to improved guidance and thus to improved movability of the cover units when inserted into one another.

In a further embodiment, it is provided that the cover units comprise a retainer section extending along the plate section, but off-set with respect to the plate section in the width direction of the of the respective cover unit. The retainer section may be attached to/merge into the off-set guide rail subsection. Preferably the off-set matches an extension of the plate section and/or guide rail in the width direction, such that the plate section of one cover unit may be guided by (and/or between) the plate section and retainer section of the other cover unit when the cover units are inserted into one another. This also leads to improved guidance and thus to improved movability of the cover units when inserted into one another while fostering stability of the rail cover device.

The retainer sections may be arranged at end sections of the cover units, which end sections preferably cover less than 35%, more preferably less than 20%, most preferably less than 15% of the length measured in the main extension direction of the holding elements. Preferably, the end section is located, in the length direction, opposite to the holding element. So retainer sections and holding elements may be arranged at opposite end sections of the respective cover unit. This is advantageous regarding the tolerances to be met for reliably and easily sliding the cover units along each other when inserted to one another.

In another embodiment, the two cover units of the rail cover device are configured for independent mounting onto the railway rail foot. Then, one end section of the respective cover unit, preferably an end section remote from the end section with the holding element, comprises a hinge, preferably a film hinge, connecting an additional plate section with the rest of the respective cover unit. Thus, plate section and additional plate section can be moved with respect to one another, adjusting the height of the rail cover system such that the individual cover units fit into any gap between sleeper and railway rail foot. Thus, the two cover units may be inserted into the mouth of said gap and prevent any cable from sliding into said gap.

A further aspect relates to a method for providing a railway rail with any one of the described embodiments of a rail cover device in order to protect railway cables. One method step comprises inserting the first and the second cover unit into one another with parallelly or at least partially parallely orientated plate sections, in a direction transverse to the main extension direction of the cover units and transverse to the height direction of the cover units (i.e. the width direction). Therein, a distance of first and second holding element have a first value. Another method step comprises pulling apart first and second cover unit along the main extension direction (i.e. the length direction, in a sliding direction) of the cover units, thereby enlarging the distance between first and second holding element. A further method step comprises pushing together first and second cover unit along the main extension direction of the cover units (i.e. the length direction, in an opposite sliding direction) with the foot of the railway rail arranged between first and second holding element until the cover units are held on/attached to an edge of a foot of the railway rail by the holding elements. There, the distance of first and second holding element have a second value. Preferably, the second value of the distance of first and second holding element is larger than the first value of the distance of first and second holding element. The pulling apart may be executed prior to the pushing together.

This gives the advantage that the rail cover device is easy to assemble. Furthermore, the rail cover device may be pre-assembled, e.g. with the inserting and the pulling executed on a production site instead of on the installation site. If the device is assembled on the installation site, it requires only little time and effort. This further contributes to easy handling and reliable application.

Advantages and advantageous embodiments of the latter aspect correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially perpendicular/parallel", i.e. " perpendicular/parallel" or "substantially perpendicular/parallel", i.e. perpendicular/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially anti-parallel oriented". The orientation of a plane may be determined by its normal vector. The limitation "substantially" may also refer to a percentage predetermined maximum permissible deviation, for example at most 15%, preferably at most 5%, particularly preferably at most 3%.

### Detailed description

Example embodiments are described in more detail below with reference to schematic drawings. Therein
- Fig. 1: shows an example embodiment of a cover unit for an example rail cover device embodiment in a perspective view;
- Figs. 2A-2D: show different side views on the cover unit of Fig. 1;
- Fig. 3A-3B: show the example rail cover device that can be formed by two identical cover units as those of Figs. 1-2D in a side view in different configurations;
- Fig. 4: shows the rail cover device of Figs. 3A-3B in a perspective view;
- Fig. 5: shows the configuration of Fig. 4 in a sectional view;
- Fig. 6: shows the rail cover device of Fig. 4 in a side view;
- Fig. 7: shows the rail cover device of Figs. 3A-6 attached to a railway rail in a schematic view;
- Fig. 8: shows another example rail cover device embodiment attached to a railway rail in a schematic view; and
- Fig. 9: the example embodiment of the cover unit of Fig. 8.

In the figures, the same or functionally identical features are provided with the same reference signs.

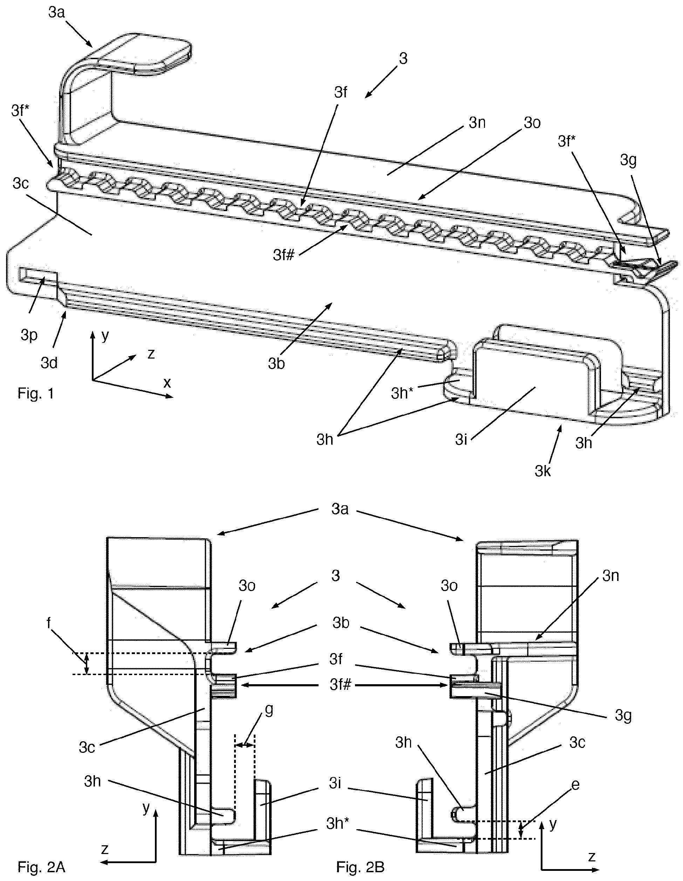

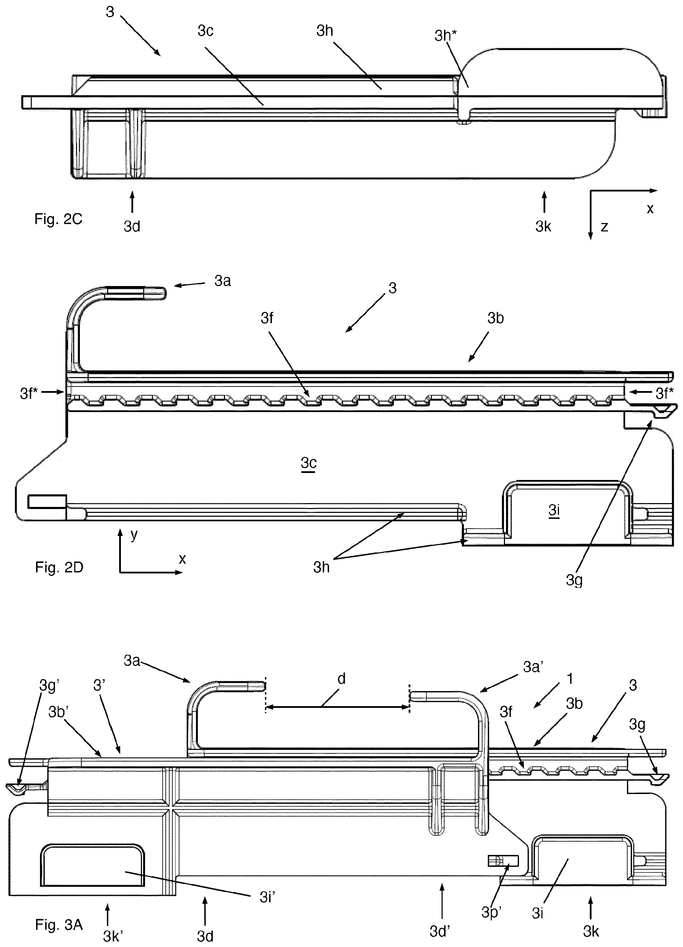

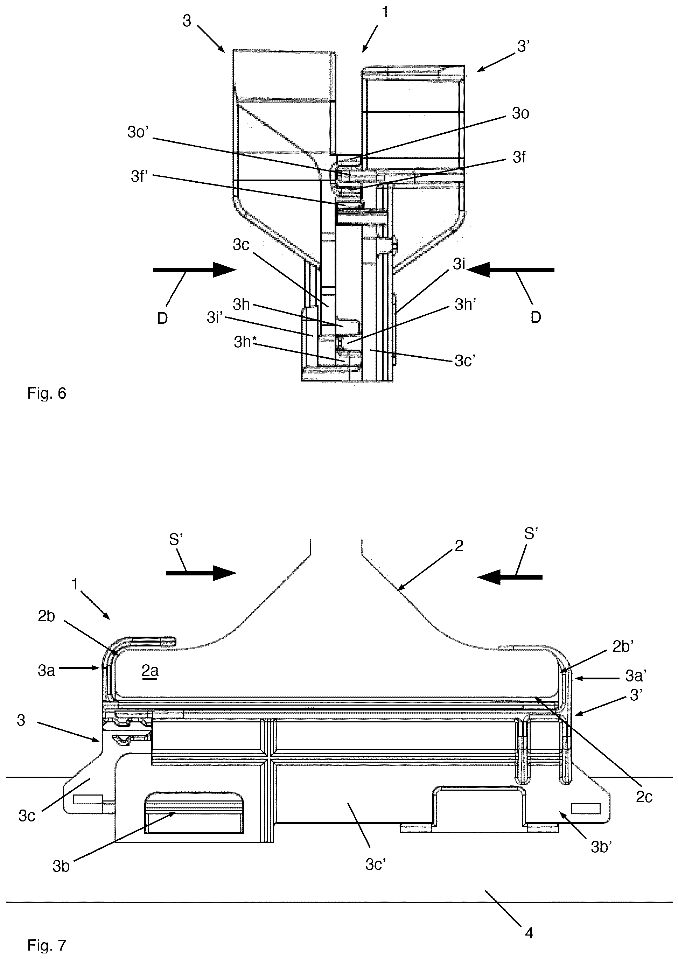

Fig. 1 shows an example embodiment of a cover unit for an example rail cover device embodiment in a perspective view. Said rail cover device 1 (Fig. 3A) is to be attached to an underside 2c (Fig. 7) of a foot 2a (Fig. 7) of a railway rail 2 (Fig. 7). The rail cover device 1 is comprising, preferably composed of, two identical cover units 3, 3' (Fig. 3A), an example for which cover units 3, 3' is show in Fig. 1.

The cover unit 3 has a holding element 3a configured for holding the cover unit 3 on an edge 2b, 2b' (Fig. 7) of the foot 2a of the railway rail 2. In the present example, the holding element 3a has a hook-like shape for extending around said edge 2b. The cover unit 3 also has a covering element 3b with one or more plate sections 3c, 3c' configured to extend in a length direction (here x-direction) perpendicular to a main extension direction of the railway rail 2 (here the z-direction) below said foot 2a of the railway when the cover unit 3 is attached to the edge 2b, 2b' of the foot 2a of the railway rail 2 by means of the holding element 3a. In the shown example, the holding element 3a, is arranged at an end section 3d of the cover units 3, which end section 3d comprises a respective end of the cover unit 3 along the length direction. Said end section 3d comprises, in the shown example, an eye 3p for suitable for a cable tie. So a cable tie may be used to attach a railway cable to the cover unit 3 in order to prevent unintended displacement of the railway cable.

As shown in this example, the plate section 3c may extend along a length direction as main extension direction of the respective cover unit 3 (which is the x-direction here) and along a height direction of the respective cover unit 3 running transverse to the main extension direction of the respective cover unit 3 (which is the y-direction here). The plate section 3c may extend at least essentially over the full length and/or full height of the covering element 3b.

In addition to the plate section 3c, the covering element 3b may comprises, in the shown example, a contact section 3n. The contact section 3n has a main extension plane that runs along length and width direction of the cover unit 3 (x- and z direction here) - it thus is configured to run along the underside 2c of the railway rail foot 2a. The rail cover device 1 may be configured such that at least one, preferably only one of the cover units 3, 3' is in mechanical contact with the railway rail foot 2a with its contact section 3n when the rail cover device 1 is attached to the railway rail 2.

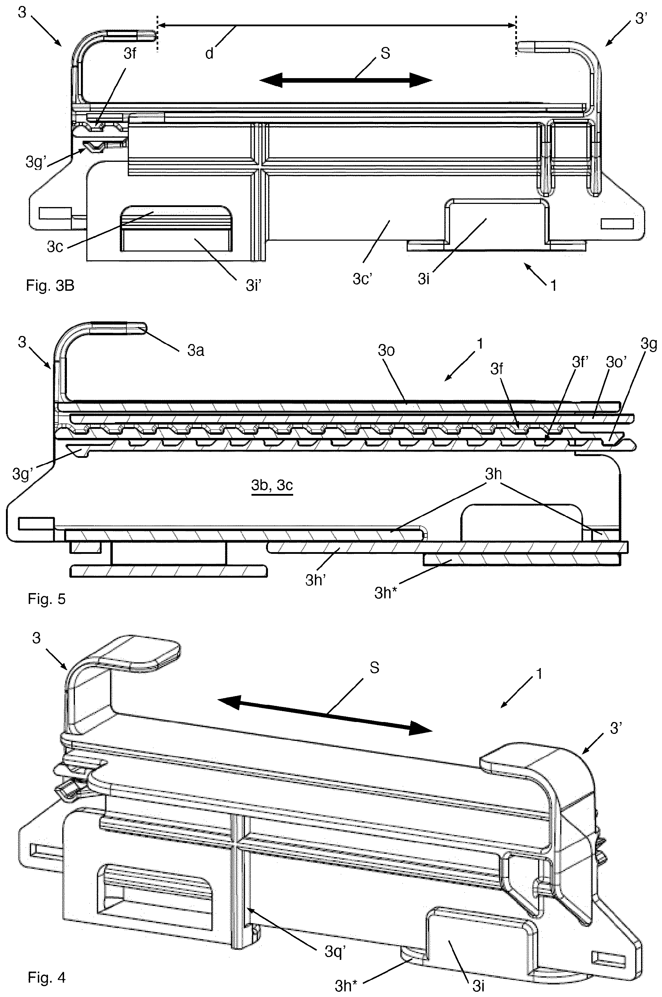

Here, the example cover unit 3 comprises a female ratchet 3f extending along the length direction of the cover unit 3, as well as a male ratchet 3g. This male ratchet 3g is aligned with the female ratchet 3f in the length direction but oriented oppositely to the female ratchet 3f. The female ratchet is formed on a protrusion from the plate section 3c in the width direction (negative z-direction here). This is to enable mechanical interaction of the male ratchet 3g of this (first) cover unit 3 with the female ratchet 3f' (Fig. 3A) of the corresponding (second) cover unit 3' (Fig. 3A) of the rail cover device 1 as e.g. shown in Fig. 4.

In this example, both ends 3f* of the female ratchet 3f as viewed along the length direction are open ends (3f*), and one side (3f#) of the female ratchet (3f, 3f') extending along a side of the covering element 3b in the length extension direction is an open side 3f#. This open side allows two cover units 3, 3' to be inserted into one another into an insertion direction D as shown in Fig. 6. The open ends 3f* allow the two cover units 3, 3' to slide along each other with female and male ratchet 3f', 3g engaging in a ratching/latching connection as shown in Fig. 4, for instance. The ratching/latching connection is enhanced by a ratchet counterrail 3o which is arranged opposite to the female ratchet 3f in the height direction. The ratchet counterrail 3o prevents the protruding female ratchet 3f' and thus the male ratchet 3g' of the other cover unit 3' to disengage from the female ratchet of the cover unit 3 at hand.

The cover unit 3 may, as also shown here, comprise a guide rail 3h that extends along the length direction of the cover unit 3. This guide rail 3h protrudes in the width direction of the respective cover unit 3 from the corresponding plate section 3c (i.e. the negative z-direction here). Here, the guide rail 3h comprises an off-set guide rail subsection 3h*. This guide rail subsection 3h* is off-set from the remaining guide rail 3h in the height direction (negative y-direction here). The off-set subsection 3h* may be arranged in another end section 3k, which other end section 3k is located opposed to the end section 3d in the length direction, i.e. comprises the end opposite to the end of end section 3d.

As explained in more detail with reference to Figs 2A and 2B, the off-set may be matching the extension of the guide rail 3h' in the height direction (of the other cover unit 3', which is of course identical to the extension of the guide rail 3h of the cover unit 3 considered here). This matching allows the guide rail 3h of one cover unit 3 to be guided by the guide rail 3h' of the other cover unit 3' when the cover units 3, 3' are inserted into one another as shown in Figs. 4 and 6, for example.

In the shown example, the cover unit 3 comprises a retainer section 3i which is extending along the respective plate section 3c, but id off-set with respect to the plate section 3c in the width direction. The off-set is advantageously matching an extension of the plate section 3c and of the guide rail 3h in the width direction, such that the plate section 3c of one cover unit 3 may be guided by the plate section 3c' and retainer section 3i' of the other cover unit 3' when the cover units 3, 3' are inserted into one another, as depicted in Fig. 6, for instance. Preferably the retainer section 3i is located in said other end section 3k, such that retainer section 3i and holding element 3a are arranged at opposite ends of the cover unit 3.

Figs. 2A-2D show different side views on the cover unit of Fig. 1. The off-set of counterrail 3o and female ratchet 3f in the height direction (here y-direction) is set such that width f minimizes a play in the height direction between female ratchet 3f one the one hand side and other female ratchet 3f' and couterrail 3o' on the other hand side, or a play in the height direction between female ratchet 3f' one the one hand side and female ratchet 3f and counterrail 3o on the other hand side, respectively, when the cover units 3, 3' are inserted into one another as e.g. shown in Fig. 6.

Correspondingly, the off-set of guide rail subsection 3h* and the rest of the guide rail 3h in the height direction (here y-direction) is set such that width e minimizes a play in the height direction between guide rail subsection 3h* and the rest of the guide rail 3h on one hand side and the other rest of the guide rail 3h' on the other hand side, or a play in the height direction between other guide rail subsection 3h*' and the rest of the guide rail 3h' on one hand side and the rest of the guide rail subsection 3h* on the other hand side, respectively, when the cover units 3, 3' are inserted into one another as e.g. shown in Fig. 6.

In addition, the off-set of the retainer section 3i and plate section 3c in the width direction (here z-direction) is set such that width g minimizes a play in the width direction between retainer section 3i and plate section 3c on the one hand side and other plate section 3c' on the other hand side, and a play in the width direction between other retainer section 3i' and plate section 3c' on the one hand side and plate section 3c on the other hand side, respectively, when the cover units 3, 3' are inserted into one another as e.g. shown in Fig. 6.

Fig. 3A-3B show the example rail cover device that can be formed by two identical cover units as those described above in a side view in different configurations. In Fig. 3A the cover units 3, 3' are inserted into one another with at least partially parallelly oriented plate sections 3c, 3c' in an insertion direction D (Fig. 6) which runs transverse the drawing plane. This is done exactly such that the female ratchet of the other/second cover unit 3' slips into the gap between counterrail 3o and female ratchet 3f of the one/first cover unit 3, with the end section 3d'with the eye 3p' being arranged between the end sections 3d, 3k of the one/first cover unit 3.

In the configuration of Fig. 3A, the distance d between the holding elements 3a, 3a' of the different cover units 3, 3' is relatively small, it may be too small for the foot 2a of the railway rail 2. Furthermore, the shown configuration is not stable, i.e. the two cover units 3, 3' may fall apart in directions opposite to the insertion direction D.

Consequently, before the railway rail 2 is provided with the rail cover device 1, it is advantageous to pull apart the two cover units 3, 3' in a sliding direction S, as shown in Fig. 3B. Thereby, distance d is enlarged and the other/second plate section 3c' of the other/second cover unit 3' is arranged between retainer section 3i and plarte section 3c of the one/first cover unit 3, and the one/first plate section 3c of the one/first cover unit 3 is arranged between retainer section 3i' and plate section 3c' of the other/second cover unit 3'. Consequently, the assembly of the two cover units 3, 3' cannot fall apart in directions opposite to the insertion direction D.

Furthermore, the configuration of Fig. 3A will not be taken unintendedly, since the ratching/latching connection prevents a movement of the cover units 3, 3' with respect to each other along the sliding direction. The cover units 3, 3' may even be pulled apart until the retainer section 3i/the guide rail subsection3h* of the one/first cover unit 3 abut a stopper 3q' of the other/second cover unit 3a', and vice versa (vice versa not visible in Fig. 4). This maximally pulled apart configuration is a suitable pre-installation configuration, which allows installing the rail cover device 1 with the simple steps of putting it in place at the underside 2c of the foot 2a of railway rail 2 and pushing the cover units 3, 3' together until the rail cover device 1 is fixedly attached to the foot 2a at the desired/pre-defined position.

Fig. 5 shows, in a sectional view, details on the guiding of the two cover units 3, 3' by one another. Namely, it shows once more how the play in the height direction is limited by i) the arrangement of second guide rail 3h' between first off-set guide rail subsection 3h* and the rest of the first guide rail 3h and ii) the arrangement of the first female ratchet 3f between second female ratchet 3f' and counterrail 3o', as well as second counterrail 3o' between first female ratchet 3f and first counterrail 3o.

In Fig. 7 the described rail cover device 1 is attached to the railway rail 2. In order to attach the rail cover device 1, the two identical cover units 3, 3' have been slid/pushed towards each other in the opposite sliding direction S' until the foot 2a is clamped in between the two holding elements 3a, 3a'. Thus, at least the contact section 3n of the one cover unit 3 will be in contact with the underside 2c, providing an additional tilting protection for the rail cover device 1.

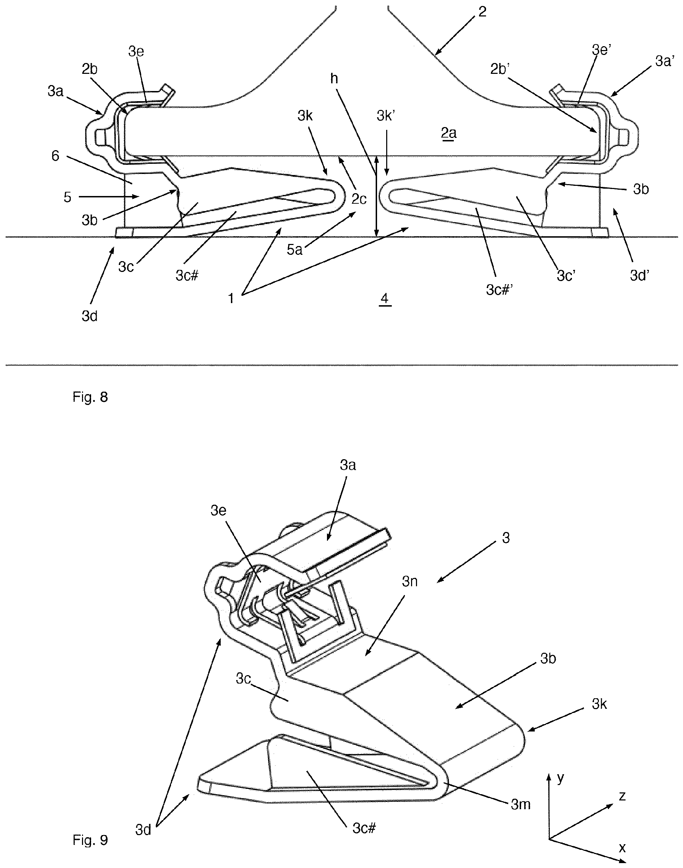

The respective holding elements 3a, 3a' are configured for holding the respective cover unit 3, 3' on the foot 2a of the railway rail 2 at opposite positions on opposing edges 2b, 2b' of the foot 2a of the railway rail 2. As a consequence to proper positioning of the rail cover device 1 in abutment to a sleeper 4, a gap 5 (Fig. 8) between sleeper 4 and railway rail 2 is covered (and thus not visible in Fig. 7). The covering prevents sliding of a railway cable into said gap 5, which otherwise might damage the railway cable.

Thus, the plate sections 3c, 3c' jointly extend, along a rail width direction (along the opposite sliding direction S' here) over the width of entire foot 2a (along the opposite sliding direction S' here) in this example.

Fig. 8 shows another example rail cover device embodiment attached to a railway rail. Also in this embodiment, the rail cover device 1 comprises or consists of two identical cover units 3, 3'. However, the two cover units 3, 3' are configured for independent mounting onto the railway rail foot 2a:
As apparent from Figs. 8 and 9, again the cover units 3, 3' have a holding element 3a, 3a' configured for holding the cover unit 3, 3' on the edge 2b, 2b' (Fig. 8) of the foot 2a of the railway rail 2. In the present example, the holding elements 3a, 3a' again have a hook-like shape for extending around said edges 2b, 2b'. Here, the holding elements 3a, 3a' have metal inserts 3e, 3e' configured as an edge clip for the edge 2b, 2b' of the railway rail foot 2a. The metal inserts 3e, 3e' may also be applied to the above example rail cover device 1.

Also in this example, the holding elements 3a, 3a' are arranged at respective end sections 3d of the cover units 3, which end sections 3d, 3d' comprises a respective end of the respective cover unit 3, 3' along the length direction (x-direction in Fig. 9). Said end section 3d comprises, in the shown example, an eye 3p for suitable for a cable tie. So a cable tie may be used to attach a railway cable to the cover unit 3 in order to prevent unintended displacement of the railway cable.

The cover units 3, 3' also have covering elements 3b, 3b' with one or more, here two plate sections 3c, 3c', 3c#, 3c#' configured to extend in a length direction (x-direction in Fig. 9) perpendicular to a main extension direction of the railway rail 2 below said foot 2a of the railway when the cover units 3, 3', i.e. the rail cover device 1, is attached to the edges 2b, 2b' of the foot 2a of the railway rail 2 by means of the holding elements 3a, 3a'. In end sections 3k, 3k' remote (opposite in the x-direction) from the respective end sections 3d, 3d' with the holding elements 3a, 3a', the cover units 3, 3' comprise respective hinges 3m. These hinges 3m allow the additional plate sections 3c#, 3c#' of the respective cover units 3, 3' to slide by, in the height direction (y-direction in Fig. 9), the original plate sections 3c, 3c' that are (slightly) off-set with respect to the additional plate sections 3c#, 3c#' in the width direction of the cover units 3, 3' (z-direction in Fig. 9).

This results in an overall height of the covering elements 3b, 3b' adjusting itself to a height h of the gap 5 between sleeper 4 and railway rail 2 when the cover units 3, 3' are slid into said gap 5. The the original plate sections 3c, 3c' and the additional plate sections 3c#, 3c#' are, in this example, configured to overlap and the length of the covering elements 3b, 3b' /plate sections 3c, 3c' is chosen such that no gap remains between the original plate sections 3c, 3c' and the additional plate sections 3c#, 3c#' , and only a minimal gap 5a remains between the two cover units 3, 3'. Consequently, when the cover units 3, 3' are pushed onto the foot 2a of the railway rail 2 at opposite positions on opposing edges 2b, 2b' of the foot 2a of the railway rail 2 into the gap 5, the plate sections jointly extend along the rail width direction (perpendicular to the main extension direction of the railway rail 2) over most of the width of the foot 2a, hindering any railway cable from entering said gap 5, similarly to the above example for a rail cover device 1.

## Claims

1. Rail cover device (1) for attachment at an underside (2c) of a foot (2a) of a railway rail (2), comprising
- a first cover unit (3) with a first holding element (3a) configured for holding the first cover unit (3) on a first edge (2b) of the foot (2a) of the railway rail (2), and with a first covering element (3b) with one or more first plate sections (3c) configured to extend perpendicular to a main extension direction of the railway rail (2) below said foot (2a) of the railway rail when the first cover unit (3) is attached to the first edge (2b) of the foot (2a) of the railway rail (2) by means of the first holding element (3a); and
- a second cover unit (3') with a second holding element (3a') configured for holding the second cover unit (3') on a second edge (2b') of the foot (2a) of the railway rail (2), and with a second covering element (3b') with one or more second plate sections (3c') configured to extend perpendicular to the main extension direction of the railway rail (2) below said foot (2a) of the railwayrail when the second cover unit (3') is attached to the second edge (2b') of the foot (2a) of the railway rail (2) by means of the second holding element (3a'); wherein
- first and second holding elements (3a, 3a') are configured for holding the respective cover unit (3, 3') on the foot (2a) of the railway rail (2) at opposite positions on opposing edges (2b, 2b') of the foot (2a) of the railway rail (2) with the one or more first and one or more second plate sections (3c, 3c') jointly extending, along a rail width direction perpendicular to the main extension direction of the railway rail (2), over at least most of the width of the foot (2a) of the railway rail (2);
**characterized in that**
- the first and the second cover units (3, 3') are identical cover units (3, 3').

2. Rail cover device (1) according to the preceding claim,
wherein the one or more first and one or more second plate sections (3c, 3c') jointly extend, along the rail width direction perpendicular to the main extension direction of the railway rail (2), over at least 50% of the width of the foot (2a) of the railway rail (2), preferably over at least 80% of the width, more preferably over the full width of the foot (2a) of the railway rail (2).

3. Rail cover device (1) according to any one of the preceding claims,
wherein
the plate sections (3c, 3c') extend along a main extension direction of the respective cover unit (3, 3') and along a height direction of the respective cover unit (3, 3') running transverse to the main extension direction of the respective cover unit (3, 3').

4. Rail cover device (1) according to any one of the preceding claims,
wherein
the holding elements (3a, 3a') are arranged at end sections (3d, 3d') of the cover units (3, 3'), which end sections (3d, 3d') preferably cover less than 35%, more preferably less than 20%, most preferably less than 15% of a length measured in the main extension direction of the cover units (3, 3').

5. Rail cover device (1) according to any one of the preceding claims,
wherein each of the holding elements (3a, 3a') has a metal insert (3e, 3e') configured as an edge clip for the edge (2b, 2b') of the railway rail foot (2a).

6. Rail cover device (1) according to any one of the preceding claims,
wherein each of the cover units (3, 3') comprises a female ratchet (3f, 3f') extending along the main extension direction of the respective cover unit (3, 3'), as well as a male ratchet (3g, 3g'), which male ratchet (3g, 3g') is aligned with the female ratchet (3f, 3f') but oriented oppositely to the female ratchet (3f, 3f').

7. Rail cover device (1) according to the preceding claim,
wherein
both ends (3f*) of the female ratchet (3f, 3f') along the main extension direction of the respective cover unit are open ends (3f*), and one side (3f#) of the female ratchet (3f, 3f') extending along the main extension direction of the respective cover unit (3, 3') is an open side (3f#).

8. Rail cover device (1) according to any one of the preceding claims,
wherein
a guide rail (3h, 3h') extends along the main extension direction of the respective cover unit (3, 3'), which guide rail (3h, 3h') protrudes in a width direction of the respective cover unit (3, 3') from the corresponding plate section (3c, 3c').

9. Rail cover device (1) according to the preceding claim,
wherein
the guide rail (3h, 3h') comprises an off-set guide rail subsection (3h*, 3h*'), which guide rail subsection (3h*, 3h*') is off-set from the remaining guide rail (3h, 3h') in a height direction of the respective cover unit (3, 3'), preferably with the off-set matching the extension of the guide rail (3h, 3h') in the height direction, such that the guide rail (3h, 3h') of one cover unit (3, 3') may be guided by the guide rail (3h, 3h') of the other cover unit (3', 3) when the cover units (3, 3') are inserted into one another.

10. Rail cover device (1) according to any one of the preceding claims,
wherein
the cover units (3, 3') comprise a retainer section (3i, 3i') extending along the respective plate section (3c, 3c'), but off-set with respect to the plate section (3c, 3c') in a width direction of the of the respective cover unit (3, 3'), where the width direction runs transverse the height direction and the main extension direction of the respective cover unit (3, 3'), preferably with the off-set matching an extension of the plate section (3c, 3c') and/or guide rail (3h, 3h') in the width direction, such that the plate section (3c, 3c') of one cover unit (3, 3') may be guided by the plate section and retainer section (3i', 3i) of the other cover unit (3', 3) when the cover units (3, 3') are inserted into one another.

11. Rail cover device (1) according to the preceding claim,
wherein
the retainer sections (3i, 3i') are arranged at end sections (3k, 3k') of the cover units (3, 3'), which end sections (3k, 3k') preferably cover less than 35%, more preferably less than 20%, most preferably less than 15% of the length measured in the main extension direction of the holding elements (3a, 3a').

12. Rail cover device (1) according to the preceding claim,
wherein
the retainer sections (3i, 3i') and the holding elements (3a, 3a') are arranged at opposite end sections (3d, 3k, 3d', 3k') of the respective cover unit (3, 3').

13. Rail cover device (1) according to any one of the preceding claims 1-5,
wherein
the two cover units (3, 3') are configured for independent mounting onto the railway rail foot (2a); and
one end section (3k, 3k') of the respective cover unit (3, 3'), preferably an end section (3k, 3k') remote from the end section (3d, 3d') with the holding element (3a, 3a'), comprises a hinge (3m), preferably a film hinge, connecting an additional plate section (3c#, 3c#') of the covering element with the rest of the respective cover unit (3, 3').

14. Method for providing a railway rail (2) with a rail cover device (1) of any one of claims 1-12, comprising the method steps:
- Inserting the first and second cover units (3, 3') into one another with at least partially parallelly oriented plate sections (3c, 3c'), in an insertion direction (D) transverse to the main extension direction of the cover units (3, 3') and transverse to the height direction of the cover units (3, 3'), with a distance (d) between the first and second holding elements (3a, 3a') having a first value;
- Pulling apart the first and second cover units (3,3') in a sliding direction (S) along the main extension direction of the cover units (3, 3'), thereby enlarging the distance (d) between the first and second holding elements (3a, 3a');
- Pushing together the first and second cover units (3,3') in an opposite sliding direction (S') along the main extension direction of the cover units (3, 3') with the foot (2a) of the railway rail (2) arranged between the first and second holding elements (3a, 3a') until the cover units (3, 3') are held on the edges (2b, 2b') of the foot (2a) of the railway rail (2) by the holding elements (3a, 3a'), with the distance (d) between the first and second holding elements (3a, 3a') having a second value.

15. Method according to claim 14,
wherein
the second value of the distance (d) between the first and second holding elements (3a, 3a') is larger than the first value of the distance (d) between the first and second holding elements (3a, 3a').

## Patentansprüche

1. Schienenabdeckvorrichtung (1) zur Befestigung an einer Unterseite (2c) eines Fußes (2a) einer Eisenbahnschiene (2), umfassend
- eine erste Abdeckungseinheit (3) mit einem ersten Halteelement (3a), das dazu ausgebildet ist, die erste Abdeckungseinheit (3) an einer ersten Kante (2b) des Fußes (2a) der Eisenbahnschiene (2) zu halten, und mit einem ersten Abdeckelement (3b) mit einem oder mehreren ersten Plattenabschnitten (3c), die dazu ausgebildet sind, sich senkrecht zu einer Haupterstreckungsrichtung der Eisenbahnschiene (2) unterhalb des Fußes (2a) der Eisenbahnschiene zu erstrecken, wenn die erste Abdeckungseinheit (3) mittels des ersten Halteelements (3a) an der ersten Kante (2b) des Fußes (2a) der Eisenbahnschiene (2) befestigt ist; und
- eine zweite Abdeckungseinheit (3') mit einem zweiten Halteelement (3a'), das dazu ausgebildet ist, die zweite Abdeckungseinheit (3') an einer zweiten Kante (2b') des Fußes (2a) der Eisenbahnschiene (2) zu halten, und mit einem zweiten Abdeckelement (3b') mit einem oder mehreren zweiten Plattenabschnitten (3c'), die dazu ausgebildet sind, sich senkrecht zu der Haupterstreckungsrichtung der Eisenbahnschiene (2) unterhalb des Fußes (2a) der Eisenbahnschiene zu erstrecken, wenn die zweite Abdeckungseinheit (3') mittels des zweiten Halteelements (3a') an der zweiten Kante (2b') des Fußes (2a) der Eisenbahnschiene (2) befestigt ist; wobei
- erste und das zweite Halteelemente (3a, 3a') so ausgebildet sind, dass sie die jeweilige Abdeckeinheit (3, 3') am Fuß (2a) der Eisenbahnschiene (2) an gegenüberliegenden Positionen an gegenüberliegenden Kanten (2b, 2b') des Fußes (2a) der Eisenbahnschiene (2) halten, wobei sich der eine oder die mehreren ersten und der eine oder die mehreren zweiten Plattenabschnitte (3c, 3c') gemeinsam sich entlang einer Schienenbreitenrichtung senkrecht zur Haupterstreckungsrichtung der Eisenbahnschiene (2) über mindestens den größten Teil der Breite des Schienenfußes (2a) der Eisenbahnschiene (2) erstrecken;
**dadurch gekennzeichnet, dass**
- die ersten und die zweiten Abdeckeinheiten (3, 3') identische Abdeckeinheiten (3, 3') sind.

2. Schienenabdeckvorrichtung (1) nach dem vorstehenden Anspruch,
wobei
der eine oder die mehreren ersten und der eine oder die mehreren zweiten Plattenabschnitte (3c, 3c') gemeinsam sich entlang der Schienenbreitenrichtung, senkrecht zur Haupterstreckungsrichtung der Eisenbahnschiene (2), über mindestens 50 % der Breite des Fußes (2a) der Eisenbahnschiene (2), vorzugsweise über mindestens 80 % der Breite, noch bevorzugter über die gesamte Breite des Fußes (2a) der Eisenbahnschiene (2) erstrecken.

3. Schienenabdeckvorrichtung (1) nach einem der vorstehenden Ansprüche,
wobei
sich die Plattenabschnitte (3c, 3c') entlang einer Haupterstreckungsrichtung der jeweiligen Abdeckungseinheit (3, 3') und entlang einer Höhenrichtung der jeweiligen Abdeckungseinheit (3, 3') erstrecken, die quer zur Haupterstreckungsrichtung der jeweiligen Abdeckungseinheit (3, 3') verläuft.

4. Schienenabdeckvorrichtung (1) nach einem der vorstehenden Ansprüche,
wobei
die Halteelemente (3a, 3a') an Endabschnitten (3d, 3d') der Abdeckungseinheiten (3, 3') angeordnet sind, wobei diese Endabschnitte (3d, 3d') vorzugsweise weniger als 35 %, noch bevorzugter weniger als 20 %, am meisten bevorzugt weniger als 15 % einer in der Haupterstreckungsrichtung der Abdeckungseinheiten (3, 3') gemessenen Länge abdecken.

5. Schienenabdeckvorrichtung (1) gemäß einem der vorstehenden Ansprüche, wobei
jedes der Halteelemente (3a, 3a') einen Metalleinsatz (3e, 3e') aufweist, der als Kantenklammer für die Kante (2b, 2b') des Schienenfußes (2a) ausgebildet ist.

6. Schienenabdeckvorrichtung (1) nach einem der vorstehenden Ansprüche,
wobei
jede der Abdeckungseinheiten (3, 3') eine entlang der Haupterstreckungsrichtung der jeweiligen Abdeckungseinheit (3, 3') verlaufende weibliche Rastvorrichtung (3f, 3f') aufweist sowie eine männliche Rastvorrichtung (3g, 3g'), wobei die männliche Rastvorrichtung (3g, 3g') auf die weibliche Rastvorrichtung (3f, 3f') ausgerichtet, jedoch entgegengesetzt zu dieser orientiert ist.

7. Schienenabdeckvorrichtung (1) nach dem vorstehenden Anspruch,
wobei
beide Enden (3f*) der weiblichen Rastvorrichtung (3f, 3f') entlang der Haupterstreckungsrichtung der jeweiligen Abdeckungseinheit offene Enden (3f*) sind und eine Seite (3f#) der weiblichen Ratsche (3f, 3f'), die sich entlang der Haupterstreckungsrichtung der jeweiligen Abdeckungseinheit (3, 3') erstreckt, eine offene Seite (3f#) ist.

8. Schienenabdeckvorrichtung (1) gemäß einem der vorstehenden Ansprüche,
wobei
sich eine Führungsschiene (3h, 3h') entlang der Haupterstreckungsrichtung der jeweiligen Abdeckeinheit (3, 3') erstreckt, wobei die Führungsschiene (3h, 3h') in einer Breitenrichtung der jeweiligen Abdeckeinheit (3, 3') aus dem entsprechenden Plattenabschnitt (3c, 3c') herausragt.

9. Schienenabdeckvorrichtung (1) nach dem vorstehenden Anspruch,
wobei
die Führungsschiene (3h, 3h') einen versetzten Führungsschienenabschnitt (3h*, 3h*') umfasst, wobei dieser Führungsschienenabschnitt (3h*, 3h*') in einer Höhenrichtung der jeweiligen Abdeckungseinheit (3, 3') gegenüber der übrigen Führungsschiene (3h, 3h') versetzt ist, wobei der Versatz vorzugsweise der Ausdehnung der Führungsschiene (3h, 3h') in Höhenrichtung entspricht, so dass die Führungsschiene (3h, 3h') einer Abdeckungseinheit (3, 3') durch die Führungsschiene (3h, 3h') der anderen Abdeckungseinheit (3', 3) geführt werden kann, wenn die Abdeckungseinheiten (3, 3') ineinander geschoben sind.

10. Schienenabdeckvorrichtung (1) nach einem der vorstehenden Ansprüche,
wobei
die Abdeckeinheiten (3, 3') einen Halteabschnitt (3i, 3i') aufweisen, der sich entlang des jeweiligen Plattenabschnitts (3c, 3c') erstreckt, jedoch in einer Breitenrichtung der jeweiligen Abdeckungseinheit (3, 3') gegenüber dem Plattenabschnitt (3c, 3c') versetzt ist, wobei die Breitenrichtung quer zur Höhenrichtung und zur Haupterstreckungsrichtung der jeweiligen Abdeckungseinheit (3, 3') verläuft, wobei vorzugsweise der Versatz einer Erstreckung des Plattenabschnitts (3c, 3c') und/oder der Führungsschiene (3h, 3h') in Breitenrichtung entspricht, so dass der Plattenabschnitt (3c, 3c') einer Abdeckeinheit (3, 3') durch den Plattenabschnitt und den Halteabschnitt (3i', 3i) der anderen Abdeckeinheit (3', 3) geführt werden kann, wenn die Abdeckeinheiten (3, 3') ineinander geschoben werden.

11. Schienenabdeckvorrichtung (1) nach dem vorstehenden Anspruch,
wobei
die Halteabschnitte (3i, 3i') an Endabschnitten (3k, 3k') der Abdeckungseinheiten (3, 3') angeordnet sind, wobei diese Endabschnitte (3k, 3k') vorzugsweise weniger als 35 %, noch bevorzugter weniger als 20 % und am meisten bevorzugt weniger als 15 % der in der Haupterstreckungsrichtung der Halteelemente (3a, 3a') gemessenen Länge abdecken.

12. Schienenabdeckvorrichtung (1) gemäß dem vorstehenden Anspruch,
wobei
die Halteabschnitte (3i, 3i') und die Halteelemente (3a, 3a') an gegenüberliegenden Endabschnitten (3d, 3k, 3d', 3k') der jeweiligen Abdeckungseinheit (3, 3') angeordnet sind.

13. Schienenabdeckvorrichtung (1) nach einem der vorstehenden Ansprüche 1-5,
wobei
die beiden Abdeckungseinheiten (3, 3') für eine voneinander unabhängige Montage am Schienenfuß (2a) ausgelegt sind; und
ein Endabschnitt (3k, 3k') der jeweiligen Abdeckeinheit (3, 3'), vorzugsweise ein vom Endabschnitt (3d, 3d') mit dem Halteelement (3a, 3a') entfernter Endabschnitt (3k, 3k'), ein Scharnier (3m), vorzugsweise ein Folienscharnier, umfasst, das einen zusätzlichen Plattenabschnitt (3c#, 3c#') des Abdeckelements mit dem Rest der jeweiligen Abdeckungseinheit (3, 3') verbindet.

14. Verfahren zum Ausstatten einer Eisenbahnschiene (2) mit einer Schienenabdeckvorrichtung (1) nach einem der Ansprüche 1-12, umfassend die folgenden Verfahrensschritte:
- Ineinanderstecken der ersten und zweiten Abdeckungseinheiten (3, 3') mit zumindest teilweise parallel ausgerichteten Plattenabschnitten (3c, 3c') in einer Einsteckrichtung (D) quer zu der Haupterstreckungsrichtung der Abdeckungseinheiten (3, 3') und quer zu der Höhenrichtung der Abdeckungseinheiten (3, 3'), wobei der Abstand (d) zwischen den ersten und zweiten Halteelementen (3a, 3a') einen ersten Wert aufweist;
- Auseinanderziehen der ersten und zweiten Abdeckungseinheiten (3, 3') in einer Gleitrichtung (S) entlang der Haupterstreckungsrichtung der Abdeckungseinheiten (3, 3'), wodurch der Abstand (d) zwischen den ersten und zweiten Halteelementen (3a, 3a') vergrößert wird;
- Zusammenschieben der ersten und zweiten Abdeckeinheiten (3, 3') in einer entgegengesetzten Gleitrichtung (S') entlang der Haupterstreckungsrichtung der Abdeckeinheiten (3, 3'), wobei der Fuß (2a) der Eisenbahnschiene (2) zwischen den ersten und zweiten Halteelementen (3a, 3a') angeordnet ist, bis die Abdeckeinheiten (3, 3') durch die Halteelemente (3a, 3a') an den Kanten (2b, 2b') des Fußes (2a) der Eisenbahnschiene (2) gehalten werden, wobei der Abstand (d) zwischen den ersten und zweiten Halteelement (3a, 3a') einen zweiten Wert aufweist.

15. Verfahren nach Anspruch 14,
wobei
der zweite Wert des Abstands (d) zwischen den ersten und zweiten Halteelementen (3a, 3a') größer ist als der erste Wert des Abstands (d) zwischen den ersten und zweiten Halteelementen (3a, 3a').

## Revendications

1. Dispositif de recouvrement de rail (1) destiné à être fixé sur une face inférieure (2c) d'un patin (2a) d'un rail de chemin de fer (2), comprenant
- une première pièce de recouvrement (3) comportant un premier élément de retenue (3a), conçu pour maintenir la première pièce de recouvrement (3) sur un premier bord (2b) du patin (2a) du rail de chemin de fer (2), et un premier élément de recouvrement (3b) comportant une ou plusieurs premières parties de plaque (3c), qui sont conçues pour s'étendre perpendiculairement à une direction d'extension principale du rail de chemin de fer (2) sous le patin (2a) du rail de chemin de fer, lorsque la première pièce de recouvrement (3) est fixée au moyen du premier élément de retenue (3a) au premier bord (2b) du patin (2a) du rail de chemin de fer (2) ; et
- une deuxième pièce de recouvrement (3') comportant un deuxième élément de retenue (3a') conçu pour maintenir la deuxième pièce de recouvrement (3') sur un deuxième bord (2b') du patin (2a) du rail de chemin de fer (2), et comportant un deuxième élément de recouvrement (3b') comportant une ou plusieurs deuxièmes parties de plaque (3c'), qui sont conçues pour s'étendre perpendiculairement à la direction principale d'extension du rail de chemin de fer (2) sous le patin (2a) du rail de chemin de fer, lorsque la deuxième pièce de recouvrement (3') est fixée au moyen du deuxième élément de retenue (3a') au deuxième bord (2b') du patin (2a) du rail de chemin de fer (2) ; dans lequel
- les premier et deuxième éléments de retenue (3a, 3a') sont conçus de manière à fixer les pièces de recouvrement respectives (3, 3') sur le patin (2a) du rail de chemin de fer (2) à des positions opposées sur des bords opposés (2b, 2b') du patin (2a) du rail de chemin de fer (2), où la ou les premières sections de plaque et la ou les deuxièmes sections de plaque (3c, 3c') s'étendent conjointement dans le sens de la largeur du rail, perpendiculairement à la direction principale d'extension du rail de chemin de fer (2), sur au moins la plus grande partie de la largeur du patin (2a) du rail de chemin de fer (2) ;
**caractérisé en ce que**
- les premières et les deuxièmes pièces de recouvrement (3, 3') sont des pièces de recouvrement identiques (3, 3').

2. Dispositif de recouvrement de rail (1) selon la revendication précédente,
dans lequel
la ou les premières sections de plaque (3c, 3c') et la ou les deuxièmes sections de plaque (3c, 3c') s'étendent conjointement dans le sens de la largeur du rail, perpendiculairement à la direction principale d'extension du rail de chemin de fer (2), sur au moins 50 % de la largeur du patin (2a) du rail de chemin de fer (2), de préférence sur au moins 80 % de la largeur, et de manière encore plus préférée sur toute la largeur du patin (2a) du rail de chemin de fer (2).

3. Dispositif de recouvrement de rail (1) selon une des revendications précédentes, dans lequel
les sections de plaque (3c, 3c') s'étendent le long d'une direction d'extension principale de la pièce de recouvrement respective (3, 3') et le long d'une direction en hauteur de l'pièce de recouvrement respective (3, 3'), qui est perpendiculaire à la direction d'extension principale de la pièce de recouvrement respective (3, 3').

4. Dispositif de recouvrement de rails (1) selon une des revendications précédentes, dans lequel
les éléments de retenue (3a, 3a') sont disposés aux parties d'extrémité (3d, 3d') des pièces de recouvrement (3, 3'), ces parties d'extrémité (3d, 3d') couvrant de préférence moins de 35 %, de manière encore plus préférée moins de 20 %, et de manière la plus préférée moins de 15 % d'une longueur mesurée dans la direction d'extension principale des pièces de recouvrement (3, 3').

5. Dispositif de recouvrement de rails (1) selon une des revendications précédentes, dans lequel
chacun des éléments de retenue (3a, 3a') comporte un insert métallique (3e, 3e') conçu comme une pince de bordure pour le bord (2b, 2b') du patin de rail (2a).

6. Dispositif de recouvrement de rail (1) selon une des revendications précédentes, dans lequel
chacune des pièces de recouvrement (3, 3') comporte un dispositif d'encliquetage femelle (3f, 3f') s'étendant le long de la direction principale d'extension de l'pièce de recouvrement respective (3, 3') ainsi qu'un dispositif d'encliquetage mâle (3g, 3g'), le dispositif d'encliquetage mâle (3g, 3g') est aligné sur le dispositif d'encliquetage femelle (3f, 3f'), mais orienté dans le sens opposé à celui-ci.

7. Dispositif de recouvrement de rail (1) selon la revendication précédente,
dans lequel
les deux extrémités (3f*) du dispositif d'encliquetage femelle (3f, 3f') sont des extrémités ouvertes (3f*) le long de la direction d'extension principale de la pièce de recouvrement respective, et un côté (3f#) du cliquet femelle (3f, 3f'), qui s'étend le long de la direction d'extension principale de la pièce de recouvrement respective (3, 3'), est un côté ouvert (3f#).

8. Dispositif de recouvrement de rail (1) selon une des revendications précédentes, dans lequel
un rail de guidage (3h, 3h') s'étend le long de la direction principale d'extension de la pièce de recouvrement respective (3, 3'), le rail de guidage (3h, 3h') faisant saillie hors de la partie de plaque correspondante (3c, 3c') dans le sens de la largeur de la pièce de recouvrement respective (3, 3').

9. Dispositif de recouvrement de rail (1) selon la revendication précédente,
dans lequel
le rail de guidage (3h, 3h') comprend un tronçon de rail de guidage décalé (3h*, 3h*'), ce tronçon de rail de guidage (3h*, 3h*') est décalé dans le sens de la hauteur de la pièce de recouvrement respective (3, 3') par rapport au reste du rail de guidage (3h, 3h'), le décalage correspondant de préférence à l'étendue du rail de guidage (3h, 3h') dans le sens de la hauteur, de sorte que le rail de guidage (3h, 3h') d'une pièce de recouvrement (3, 3') puisse être guidée par le rail de guidage (3h, 3h') de l'autre pièce de recouvrement (3', 3) lorsque les pièces de recouvrement (3, 3') sont emboîtées l'une dans l'autre.

10. Dispositif de recouvrement de rail (1) selon une des revendications précédentes, dans lequel
les pièces de recouvrement (3, 3') comportent une partie de retenue (3i, 3i') qui s'étend le long de la partie de plaque respective (3c, 3c'), mais qui, dans le sens de la largeur de la pièce de recouvrement respective (3, 3') est décalée par rapport à la partie de plaque (3c, 3c'), la direction de la largeur s'étendant transversalement à la direction de la hauteur et à la direction d'extension principale de la pièce de recouvrement respective (3, 3'), le décalage correspondant de préférence à une extension de la partie de plaque (3c, 3c') et/ou du rail de guidage (3h, 3h') dans le sens de la largeur, de sorte que la partie de plaque (3c, 3c') d'une pièce de recouvrement (3, 3') puisse être guidée à travers la partie de plaque et la partie de retenue (3i', 3i) de l'autre pièce de recouvrement (3', 3) lorsque les pièces de recouvrement (3, 3') sont emboîtées l'une dans l'autre.

11. Dispositif de recouvrement de rail (1) selon la revendication précédente,
dans lequel
les parties de retenue (3i, 3i') sont disposées aux parties d'extrémité (3k, 3k') des pièces de recouvrement (3, 3'), ces parties d'extrémité (3k, 3k') couvrant de préférence moins de 35 %, de manière encore plus préférée moins de 20 % et, de manière la plus préférée, moins de 15 % de la longueur mesurée dans la direction principale d'extension des éléments de retenue (3a, 3a').

12. Dispositif de recouvrement de rail (1) selon la revendication précédente,
dans lequel
les parties de retenue (3i, 3i') et les éléments de retenue (3a, 3a') sont disposés aux sections d'extrémité opposées (3d, 3k, 3d', 3k') de la pièce de recouvrement respective (3, 3').

13. Dispositif de recouvrement de rails (1) selon une des revendications 1 à 5 ci-dessus, dans lequel
les deux pièces de recouvrement (3, 3') sont conçues pour un montage indépendant l'une de l'autre sur le pied de rail (2a) ; et
une partie d'extrémité (3k, 3k') de la pièce de recouvrement respective (3, 3'), de préférence une partie d'extrémité (3k, 3k') éloignée de la partie d'extrémité (3d, 3d') avec l'élément de retenue (3a, 3a'), comprend une charnière (3m), de préférence une charnière en feuille, qui relie une partie de plaque supplémentaire (3c#, 3c#') de l'élément de recouvrement au reste de la pièce de recouvrement respective (3, 3').

14. Procédé pour équiper un rail de chemin de fer (2) d'un dispositif de recouvrement de rail (1) selon l'une des revendications 1 à 12, comprenant les étapes suivantes :
- emboîter des première et deuxième pièces de recouvrement (3, 3') dont les parties de plaque (3c, 3c') sont orientées au moins partiellement parallèlement, dans une direction d'emboîtement (D) transversale à la direction d'extension principale des pièces de recouvrement (3, 3') et transversalement à la direction de hauteur des pièces de recouvrement (3, 3'), la distance (d) entre les premier et deuxième éléments de retenue (3a, 3a') présentant une première valeur ;
- écarter des première et deuxième pièces de recouvrement (3, 3') dans une direction de glissement (S) le long de la direction principale d'extension des pièces de recouvrement (3, 3'), ce qui augmente la distance (d) entre les premiers et deuxièmes éléments de retenue (3a, 3a') ;
- rapprocher les première et deuxième pièces de recouvrement (3, 3') dans une direction de glissement opposée (S') le long de la direction principale d'extension des pièces de recouvrement (3, 3'), le talon (2a) du rail de chemin de fer (2) étant disposé entre les premier et deuxième éléments de retenue (3a, 3a'), jusqu'à ce que les pièces de recouvrement (3, 3') sont maintenues par les éléments de retenue (3a, 3a') aux bords (2b, 2b') du patin (2a) du rail de chemin de fer (2), la distance (d) entre les premier et deuxième éléments de retenue (3a, 3a') présentant une deuxième valeur.

15. Procédé selon la revendication 14,
dans lequel
la deuxième valeur de la distance (d) entre les premier et deuxième éléments de retenue (3a, 3a') est supérieure à la première valeur de la distance (d) entre les premier et deuxième éléments de retenue (3a, 3a').
